**Europäisches Patentamt**

**European Patent Office**

**Office européen des brevets**

(19)

(11) Veröffentlichungsnummer : **0 158 269**
**B1**

# (12) EUROPÄISCHE PATENTSCHRIFT

(45) Veröffentlichungstag der Patentschrift :
**19.07.89**

(51) Int. Cl.⁴ : **C 01 F 11/16**

(21) Anmeldenummer : **85103987.5**

(22) Anmeldetag : **03.04.85**

(54) Verfahren zur Bereitung und Reinigung wässriger Calciumhydroxid-Lösungen.

(30) Priorität : 07.04.84 DE 3413243

(43) Veröffentlichungstag der Anmeldung :
16.10.85 Patentblatt 85/42

(45) Bekanntmachung des Hinweises auf die Patenterteilung : 19.07.89 Patentblatt 89/29

(84) Benannte Vertragsstaaten :
AT CH DE FR GB IT LI NL SE

(56) Entgegenhaltungen :
DE--C-- 402 853
DE--C-- 500 292
US--A-- 1 900 253
PATENT ABSTRACTS OF JAPAN, Band 4, Nr. 190 (C-37)[672], 26. Dezember 1980; & JP - A - 55 130 819 (KUREHA KAGAKU KOGYO K.K.) 11.10.1980

(73) Patentinhaber : Flinspach, Dieter, Dr.-Ing.
Auf dem Steinenberg 2
D-7440 Nürtingen (DE)

(72) Erfinder : Flinspach, Dieter, Dr.-Ing.
Auf dem Steinenberg 2
D-7440 Nürtingen (DE)
Erfinder : Werner, Gerhard, Dr.-Ing.
Einsteinstrasse 20
D-7907 Langenau (DE)

(74) Vertreter : Glawe, Delfs, Moll & Partner Patentanwälte
Rothenbaumchaussee 58 Postfach 2570
D-2000 Hamburg 13 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Bereitung und Reinigung von wäßrigen Calciumhydroxid-Lösungen beliebiger Konzentrationen bis zur Sättigung unter Einsatz von Kalkmilch, festem Calciumhydroxid oder Calciumoxid sowie Wasser beliebiger Beschaffenheit. Das erfindungsgemäße Verfahren gestattet bei sehr kurzen Löse- und Sedimentationszeiten, die im Calciumhydroxid oder Calciumoxid enthaltenen kalkwasserunlöslichen Feststoffe sowie die beim Lösevorgang aus Inhaltsstoffen des Lösewassers entstehenden festen Reaktionsprodukte aus der Calciumhydroxidlösung bis auf sehr geringe Restanteile von insgesamt weniger als 1 mg/l zu entfernen.

Gesättigte Calciumhydroxidlösung (Kalkwasser) stellt man seit langem im wesentlichen mittels Schwebebettverfahren her, wobei in Reaktoren (Kalksättigern) von unten oder seitlich eingeführtes Wasser vertikal durch ein Bett von suspendiertem Calciumhydroxid gedrückt und das gesättigte Kalkwasser aus dem Überstehenden abgezogen wird. Alle bisher bekannten Varianten dieses Verfahrens weisen eine Reihe von z. T. gravierenden Nachteilen auf. Ein besonderer Nachteil ist das im Vergleich zur Leistung, gemessen an der in der Zeiteinheit gelösten Menge an Ca(OH)$_2$, notwendige extrem große Anlagenvolum, das sich auch in den Investitions- und Unterhaltungskosten niederschlägt. Im Hinblick auf die sonst zu groß werdende vertikale Ausdehnung des Schwebebetts ist es nämlich kaum möglich, solche Reaktoren mit flächenbezogenen Durchsatzleistungen über etwa 2 m$^3$/m$^2$. h zu betreiben. Tatsächlich werden Kalksättiger im praktischen Betrieb fast immer, insbesondere wenn feststoffärmeres Kalkwasser gefordert ist, mit noch deutlich niedrigeren Durchsatzleistungen gefahren, meist sogar erheblich unter 1 m$^3$/m$^2$. h, da sich während des Lösevorgangs feinpartikuläre Feststoffe mit nur geringer Sedimentationsgeschwindigkeit bilden. Dies ist vor allem dann der Fall, wenn, wie meist üblich, hydrogencarbonat- und/oder kohlenstoffdioxidhaltiges Lösewasser verwendet wird, aus dem sich infolge von Entcarbonisierung Calciumcarbonat sowohl in Form eigenständiger Feinstpartikel als auch in Form von kristallinen Überzügen auf den das Schwebebett bildenden Calciumhydroxidpartikeln abscheidet. Auch bei Beschickung von Kalksättigern mit hydrogencarbonatfreiem Wasser, z. B. entcarbonisiertem Wasser, treten Nachteile infolge Bildung von Teilchen mit sehr geringen Sedimentationsgeschwindigkeiten auf, da die bei diesem Vorgehen sich nicht mit Calciumcarbonat bedeckenden Calciumhydroxidpartikel mit der Betriebsszeit ihre Größe laufend verringern und schließlich bereits bei geringen hydraulischen Flächenbelastungen mit ausgetragen werden.

Kalksättiger müssen außerdem, wegen der ansonsten auftretenden Konzentrationsschwankungen, für eine Gesamtaufenthaltszeit des Wassers von mindestens 3 Stunden ausgelegt werden, wobei zusätzlich eine ausreichende Höhe des Bettes mit zu berücksichtigen ist. Noch längere Mindestreaktionszeiten können erforderlich sein, wenn aufgrund der erwähnten Entcarbonisierungseffekte die in der Nähe der Sättigungskonzentration an sich schon stark verzögerte Lösegeschwindigkeit noch weiter herabgesetzt wird. Die Oberflächenbelegung mit Calciumcarbonat verhindert im übrigen auch die vollständige Auflösung des festen Calciumhydroxids, so daß bei der in Abständen notwendigen Entfernung des zwischenzeitlich gebildeten festen Calciumcarbonats sowie der kalkwasserunlöslichen Anteile des eingesetzten Calciumhydroxids durch Abschlammung ein erheblicher Anteil an nicht genutztem Calciumhydroxid verloren geht.

Weitere Nachteile sind mit dem Ersatz des verbrauchten Calciumhydroxids und der Konstanthaltung des Schwebebetts verbunden. Dazu werden dem Reaktor meist diskontinuierlich größere Mengen an festem Calciumhydroxid zugeführt, was zu mehrere Stunden anhaltenden gravierenden betrieblichen Instabilitäten führt. Durch eine kontinuierliche Zugabe des Calciumhydroxids, z. B. in Form von Kalkmilch, zusammen mit dem Lösewasser können derartige unerwünschte Betriebsstörungen zwar teilweise vermieden werden, doch treten bei der auch dann notwendigen Abschlammung besonders große Verluste an Calciumhydroxid ein. Diese letztgenannten Nachteile, aber auch die Empfindlichkeit der üblichen Verfahren dieser Art gegenüber Durchsatzänderungen erfordern in der Regel den Parallelbetrieb eines weiteren Kalksättigers, wodurch das Anlagenvolumen noch weiter expandiert.

Um die vorstehend aufgeführten Nachteile hinsichtlich des sehr umfangreichen Anlagenvolums zu reduzieren, wird gelegentlich ein weiteres Verfahren angewendet, bei dem abgemessene Mengen an Calciumhydroxid oder Calciumoxid, z. B. Kalkmilch bekannter Konzentration, kontinuierlich einem Wasserstrom beigemischt werden. Das so nach einer Lösezeit von etwa 10 min resultierende Kalkwasser beinhaltet allerdings alle im zu lösenden Material enthaltenen kalkwasserunlöslichen Verunreinigungen sowie das bei der Verwendung hydrogencarbonat- und kohlenstoffdioxidhaltigen Lösewassers zwangsläufig gebildete Calciumcarbonat.

Um den Umfang der damit verbundenen Nachteile näher zu erläutern, werden im folgenden einige vom Anmelder ermittelte Meßdaten aufgeführt, die bei Untersuchungen an einer großen Zahl von technischen Kalkhydratsorten, die für die Herstellung von Kalkwasser in Frage kommen, gefunden wurden. Technische Kalkhydrate enthalten je nach Hersteller und Qualität 50-100 g/kg an kalkwasserunlöslichen Feststoffen. Der Gehalt an Eisen, ausgedrückt als Eisenoxid Fe$_2$O$_3$, liegt dabei zwischen 0,5 und 5 g/kg, meist bei 1,6 g/kg, der Gehalt an Mangan, ausgedrückt als Mangan-

dioxid $MnO_2$, zwischen 0,1 und 0,6 g/kg, meist bei 0,25 g/kg. Nach dem letztgenannten Verfahren mittels Trinkwasser hergestelltes gesättigtes Kalkwasser von 10 °C enthält daher neben 1,76 g/l Ca$(OH)_2$ etwa 100 bis 200 mg/l feinst- bis grobdisperse Verunreinigungen, die aus dem zu lösenden Material stammen, sowie zusätzlich noch etwa 100 bis 800 mg/l feinstdisperses Calciumcarbonat.

Für eine Reihe von Anwendungsfällen, beispielsweise bei der Teilenthärtung von Trinkwasser durch Entcarbonisierung unter Gewinnung von hochreinem, für die industrielle Verwendung, z. B. als Füllstoff oder als Streichmasse bei der Papierherstellung geeigneten Calciumcarbonats, wird aber Kalkwasser benötigt, das keine die Verwendung störenden gröberen Partikel oder die Produktqualität des gewonnenen Calciumcarbonats wegen ihrer Eigenfärbung stark mindernden Stoffe wie Eisenoxid oder Mangandioxid enthält.

Mittels der im Vorstehenden erwähnten beiden Gruppen von bekannten Verfahren ist die Herstellung von sehr reinem Kalkwasser aber nicht oder nur in völlig unbefriedigender Weise realisierbar, insbesondere wenn große Mengen an solchem benötigt werden. Bei Verwendung von Schwebebettverfahren müßte wegen der z. T. sehr kleinen Sedimentationsgeschwindigkeiten der störenden Verunreinigungen mit extrem langen Aufenthaltszeiten gearbeitet werden, was einen nicht tragbaren apparativen Aufwand nach sich ziehen würde. Die Anwendung von Verfahren der zweiten Gruppe würde eine Nachreinigung des bereiteten Kalkwassers erfordern, wobei eine Sedimentation in Absetzbecken üblicher Konstruktion wegen der erforderlichen langen Verweilzeiten von etwa 10 Stunden und wegen der nur durch eine luftdichte Umbauung der Absetzvorrichtung vermeidbaren Reaktion des gelösten Calciumhydroxids mit dem in der Luft enthaltenen Kohlenstoffdioxid ebenfalls mit gravierenden Nachteilen behaftet wäre. Die als Alternative denkbare Abtrennung der Verunreinigungen durch Filtration würde umfangreiche Filteranlagen bedingen, wobei ebenfalls eine Reihe von zusätzlichen Maßnahmen, z. B. Verhinderung des Zutretens von Luft, Rückspülung der Filter mit hydrogencarbonat- und kohlenstoffdioxidfreiem Wasser, Verwendung von kohlenstoffdioxidfreier Luft für die Luftspülung, unumgänglich wären. Das Fehlen solcher Verfahren zeigt, daß derartige Verfahrensführungen sich weit außerhalb jeder denkbaren Kosten-Nutzen-Relation bewegen.

Der Erfindung liegt die Aufgabe zugrunde, ein Verfahren zur Herstellung stets von suspendierten Partikeln sowie von Eisen- und Manganverbindungen freiem Kalkwasser zu schaffen, das die den bekannten Verfahren anhaftenden Nachteile vermeidet, das eine hohe Betriebsstabilität aufweist und außerdem eine Nachbehandlung des Kalkwassers, z. B. durch Filtration, aufgrund seiner Leistung überflüssig macht. Diese Aufgabe wird mit dem im Anspruch 1 angegebenen Verfahren gelöst.

Bei der Lösung einer der Löslichkeit von Calciumhydroxid in Wasser entsprechenden Menge von festem oder suspendiertem Calciumhydroxid oder -oxid nach den bisher üblichen Verfahren wird stets, auch bei Verwendung eines Rührwerks, Kalkwasser mit einem hohen Gehalt an fein- bis feinstdispersen, zum großen Teil sehr langsam sedimentierenden Partikeln und Mikroflocken erhalten. Demgegenüber gelingt es überraschenderweise bei Anwesenheit eines oder mehrerer Flockungshilfsmittel durch die Anwendung eines ungewöhnlich hohen Energieeintrags von mindestens 20 vorzugsweise aber 100 W/m³, bezogen auf das Reaktionsvolumen der für die Lösung zur Verfügung stehenden Zone, bei gleichzeitiger konsequenter Beschränkung der Reaktionszeit auf maximal 5 min, eine vollständige Ausflockung aller Verunreinigungen zu erzielen. Diese erfindungsgemäße Verfahrensführung während des Lösevorgangs ist Voraussetzung für die nun ebenfalls erfindungsgemäß unmittelbar anschließende Ausreaktion der gebildeten Flocken und deren Agglomeration bei nur geringfügiger Bewegung der Lösung in einer nachgeordneten Großflockenbildungszone. Unter diesen Bedingungen bilden sich dort dann große Flockenaggregate mit hohen Sedimentationsgeschwindigkeiten von über 10 bis 20 m/h, die alle ansonsten nur sehr langsam sedimentierenden Partikel und Flöckchen einschließen. Es wurde gefunden, daß das an den erläuterten Vorgängen mit beteiligte Magnesium, das bei den hohen pH-Werten von Calciumhydroxidlösungen als Magnesiumhydroxid ausfällt, bereits bei einer in mol/m³ ausgedrückten Konzentration im Lösewasser von weniger als 5 % des Wertes für die Säurekapazität bis pH = 4,3 einen optimalen Ausflockungseffekt erlaubt. Ein derartiges Magnesium-Hydrogencarbonatverhältnis liegt aber in aller Regel bei Wässern, die als Lösewasser eingesetzt werden, vor. In Ausnahmefällen ist es vorteilhaft, durch Zugabe von Magnesiumsalzen vor oder während des Lösevorgangs einen auch dann stets optimalen Flockungseffekt sicherzustellen.

Die mit der Erfindung erzielte Verbesserung der Absetzeigenschaften der ansonsten nur sehr langsam sedimentierenden Verunreinigungen muß nicht nur wegen der Größe des so erzielten Effektes als überraschend angesehen werden, sondern auch deshalb, weil nicht zu erwarten war, daß ein solcher Effekt sich überhaupt in einer gesättigten Calciumhydroxidlösung und zudem bereits bei Anwesenheit nur sehr kleiner Mengen an Flockungshilfmittel von beispielsweise etwa 0,02 bis 0,05 mg/l einstellen könnte. Ebenso war nicht vorauszusehen, daß dieser Effekt ausschließlich nur bei zeitlich stark beschränktem hohem Energieeintrag eintritt und daß dabei trotz der kurzen Reaktionszeit dennoch eine vollständige Auflösung des lösbaren Anteils des eingesetzten festen Calciumhydroxids bezw. -oxids erfolgt. Als besonders vorteilhaft hinsichtlich der anschließenden Abtrennung der in der zweiten Zone (Großflockenbildungszone) ausgebildeten Flocken von der Calciumhydroxidlösung hat sich die Verwendung von Schrägplattenklä-

rern oder Röhrensedimentatoren erwiesen, die aufgrund der hohen Sedimentationsgeschwindigkeit der erfindungsgemäß erzeugten Flockenaggregate eine praktisch vollständige Entfernung aller dispersen Verunreinigungen aus der Lösung bis auf Restgehalte von weniger als 1 mg/l innerhalb von wenigen Minuten erlauben.

Da weiterhin auch die Reaktionszeit in der zweiten Zone bei Verwendung der genannten Klärvorrichtungen auf 2 bis 4 Minuten beschränkt werden kann, ohne daß Nachteile zu erwarten sind, beträgt die Gesamtaufenthaltszeit einschließlich der Aufenthaltszeit im Separator in einer nach dem erfindungsgemäßen Verfahren erstellten Anlage bei optimaler Entfernung der dispersen Verunreinigungen weniger als 12, bei optimaler Anlagengestaltung sogar nur 6 bis 8 Minuten. Im Hinblick auf die Erzielung möglichst kurzer Gesamtaufenthaltszeiten ist es vorteilhaft, die zweite Zone räumlich so anzuordnen, z. B. zwischen den Schrägplattenklärern oder Röhrensedimentatoren, daß die gebildeten Großflocken seitlich oder nach unten direkt in die Sedimentationszone austreten können und damit keinerlei Scherkräften beim Zonenwechsel ausgesetzt sind.

Das erfindungsgemäße Verfahren gestattet grundsätzlich, von Lösewasser beliebiger Beschaffenheit auszugehen. Bei der besonders eleganten Variante unter Verwendung von teilenthärtetem Wasser, das durch Entcarbonisierung unter Zugabe von Flockungshilfsmitteln hergestellt wurde und das somit sowohl das im Ausgangswasser bereits vorhandene Magnesium als auch noch geringe Mengen an Flockungshilfsmitteln enthält, sind für die Erzielung des optimalen Flockungseffektes keinerlei weitere Zusätze an Flockungs- und Flockungshilfsmitteln oder anderen Stoffen erforderlich. Ansonsten wird das Flockungshilfsmittel in der benötigten Menge, beispielsweise in Mengen von 0,02 bis 0,05 g/m$^3$, an einer beliebigen Stelle vor der Lösezone oder dort selbst zugegeben. Bei Verwendung insbesondere von magnesiumarmen Lösewässern mit einer KS 4,3 von deutlich über etwa 5 mol/m$^3$ kann es zweckmäßig sein, anstelle der bereits erwähnten Zugabe von Magnesiumsalzen zusätzlich oder ersatzweise auch Eisensalze zuzusetzen. Diese Zugabe erfolgt vorzugsweise direkt in die Lösezone. Zur Verringerung des Schlammanfalls und der benötigten Menge an Flockungsmitteln und Flockungshilfsmitteln kann es bei Lösewässern mit sehr hohen Kohlenstoffdioxidgehalten weiterhin von Vorteil sein, das während des Lösevorgangs ebenfalls zum Anfall von Calciumcarbonat führende Kohlenstoffdioxid durch vorhergehende Belüftung teilweise auszutreiben.

Das erfindungsgemäße Verfahren zeichnet sich durch eine außerordentlich große Flexibilität aus und ist völlig unempfindlich gegenüber den von den üblichen Verfahren her bekannten Betriebsinstabilitäten. So gestattet es, ohne daß dabei die Reinigungswirkung meßbar gemindert wird, beliebige Durchsatzänderungen. Es erlaubt somit auch die optimale Anpassung der Kalkwasserherstellung an den jeweiligen Kalkwasser- bezw. Calciumhydroxidbedarf. Dazu kann man entweder bei konstant gehaltener Lösewassermenge die Konzentration des Calciumhydroxids ändern, z. B. durch Steuerung der Kalkmilchmenge oder -konzentration, oder man ändert sowohl die Menge des Lösewassers als auch die des zu lösenden Stoffes.

Zu den Vorzügen des erfindungsgemäßen Verfahrens zählt weiterhin, daß aufgrund der Kompaktheit einer nach dessen Prinzipien erstellten Anlage keine besonderen Probleme hinsichtlich der Verhinderung des Luftzutritts bestehen. So beträgt die gegen Luftzutritt empfindliche Oberfläche im Bereich der Klärvorrichtungen bei gleichem Durchsatz nur etwa 2 bis 3 % der Klärfläche eines in herkömmlicher Weise arbeitenden Kalksättigers. Von besonderem Vorteil ist ferner, daß sich bei Einsatz des erfindungsgemäßen Verfahrens aufgrund dessen außerordentlich guter Reinigungsleistung der Einsatz von Filtern, der, wie bereits ausgeführt worden ist, besondere Maßnahmen zur Vermeidung einer sekundären Calciumcarbonatbildung erfordert, völlig erübrigt.

Im Rahmen des erfindungsgemäßen Verfahrens bietet sich an, den anfallenden Schlamm im Interesse einer einfachen Beseitigung bereits innerhalb der Sedimentationszone ohne Zwischenabtrennung durch Schwerkrafteinwirkung mit oder ohne zusätzliche Einwirkungen von Krählvorrichtungen einzudicken, wobei Schlammkonzentrationen von 5 bis 30 %, bezogen auf Trockensubstanz, erreicht werden. Eine solche Verfahrensführung erlaubt zugleich eine Rückführung von eingedicktem Schlamm in oder vor die Lösezone, um in Sonderfällen, z. B. bei Verwendung von stark verunreinigtem Lösewasser, eine zusätzliche Schlammkontaktwirkung zu erzielen. Wegen des großen Eindickungsgrades des nach dem erfindungsgemäßen Verfahren erhaltenen Schlamms ist dabei die Rückführmenge für den Kontaktschlamm mit weniger als 2 Vol.-% des Anlagendurchsatzes außerordentlich gering.

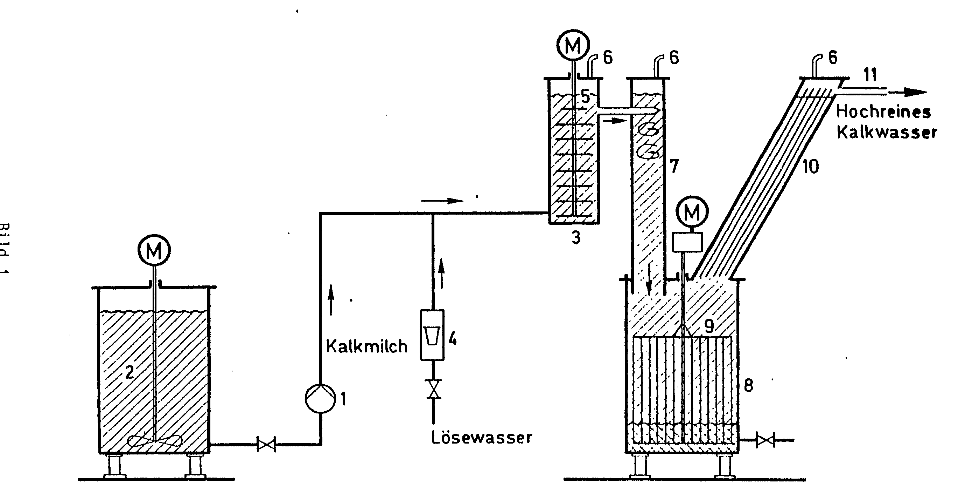

Eine der technischen Möglichkeiten zur Gestaltung einer nach dem erfindungsgemäßen Verfahren arbeitenden Kalkwasserbereitungs- und -reinigungsanlage soll im folgenden am Beispiel der vom Zweckverband Landeswasserversorgung im Wasserwerk Langenau, D 7907 Langenau, erstellten und betriebenen technischen Versuchsanlage (Bild 1) aufgezeigt werden. Die Anlage ist für einen Durchsatz von 4 m$^3$/h ausgelegt und wird mit wechselnden Durchsätzen zwischen etwa 3 und 5 m$^3$/h gefahren. Zu lösendes Medium ist technisches Kalkhydrat mit einem Gehalt an in Kalkwasser unlöslichen Feststoffen von ca. 6 bis 8 Gew.-% und einem Gehalt an Eisenoxid von etwa 1 200 ppm, ausgedrückt als Eisen. Als Lösewasser wird vorzugsweise entcarbonisiertes Trinkwasser mit einem Gehalt an Magnesium von 8 bis 10 mg/l verwendet. Dieses enthält außerdem 0,02 bis 0,03 g/m$^3$ Flockungshilfsmittel, z. B. ein Polyacrylamid. Die in Form von 5 %-iger Kalkmilch vorliegende Suspension von technischem Kalkhydrat wird mittels einer Dosierpumpe (1) aus dem Ansetzbehälter (2) entnommen und unmittelbar vor dem Lösebehälter (3) dem mittels eines Strömungsmessers (4) eingestellten Lösewasserstrom zugegeben. Der Lösebehälter ist mit einem Rührwerk (5) ausgestattet, das einen Energieeintrag bis etwa 200 W/m$^3$ erlaubt, zumeist aber auf einen Energieeintrag von 100 W/m$^3$ eingestellt ist. Er ist geschlossen ausgeführt. Der Druckausgleich erfolgt über ein auf der Oberseite angebrachtes dünnes Röhrchen (6). Die Aufenthaltszeit in dieser Zone beträgt bei Nenndurchsatz 1,8 Minuten. Der Lösebehälter ist mit dem für eine Reaktionszeit von 3 Minuten bemessenen Nachreaktionsbehälter (7) über eine kurze Rohrleitung verbunden, wobei das in der Lösezone gebildete Kalkwasser zur Erzeugung einer geringfügigen Bewegung tangential eingeführt wird. Der Nachreaktionsbehälter ist auf den Eindicker (8) aufgeflanscht, so daß die gebildeten Großflocken direkt nach unten in die Sedimentationszone austreten können. Der Absetzvorgang kann zur Kontrolle des Absetzverhaltens und der Sedimentationsgeschwindigkeit durch eine Reihe von Fenstern beobachtet werden, ebenso der abgesetzte und durch ein Krählwerk (9) verdichtete Schlamm. Die Nachreinigung des durch Sedimentation vorgereinigten Kalkwassers erfolgt mittels eines Schrägplattenklärers (10), der ebenfalls mit dem Eindicker verbunden ist und dessen Plattenlänge der auch bei Großanlagen verwendeten entspricht. Die Ablaufseite des Schrägplattenklärers (11) samt der Überlaufschwelle ist mit einer Plexiglasplatte, in der ebenfalls ein Druckausgleichsröhrchen (6) eingelassen ist, verschlossen, um den Überlaufvorgang beobachten zu können. Das ablaufende Kalkwasser wird in einer Rohrleitung der weiteren Verwendung zugeführt. Der abgesetzte Schlamm wird diskontinuierlich vermittels eines Zeitschaltwerkes abgezogen. Die bisherigen 9-monatigen Betriebserfahrungen haben gezeigt, daß der Restfeststoffgehalt des hochreinen Kalkwassers stets unter 1 mg/l liegt und daß durch den erfindungsgemäß kombinierten Löse- und Reinigungsprozeß über 99 % des im Ausgangsmaterial enthaltenen Eisens und Mangans abgetrennt werden. Betriebsstörungen irgendwelcher Art sowie Ablagerungen oder Calciumcarbonatabscheidungen an den Wänden oder auf den Platten der Kläreinrichtung wurden nicht beobachtet. Die Anlage kann ohne Nachteile mit unterschiedlichen Durchsätzen betrieben, über beliebige Zeit ohne Entleerung stillgelegt und dann wieder weiter gefahren sowie auch mit anderem als entcarbonisiertem Wasser beschickt werden.

**Patentansprüche**

1. Verfahren zur Bereitung und Reinigung einer wäßrigen Calciumhydroxidlösung unter Einsatz von Kalkmilch und/oder von festem Calciumhydroxid und/oder Calciumoxid mit folgenden Verfahrensschritten :
   a) Lösen des in der Kalkmilch suspendierten Calciumhydroxids und/oder festen Calciumhydroxids und/oder Calciumoxids in Wasser bei Anwesenheit eines oder mehrerer Flockungshilfsmittel unter Verwendung eines Rührwerkes, wobei die Einmischung der zu lösenden Komponente(n) in das Wasser in der für das Lösen bestimmten Zone und/oder in einer eigenen Zone und/oder in Zuleitungen erfolgt,
   b) Ausreaktion der beim Lösen nach a) entstehenden Flocken und/oder Reaktionsprodukte sowie weiteren unlöslichen Feststoffe unter Ausbildung sedimentierbarer Partikel,
   c) Abtrennung der Flocken und/oder der Reaktionsprodukte sowie der weiteren unlöslichen Feststoffe von der Calciumhydroxidlösung durch Sedimentation, dadurch gekennzeichnet, daß in a) die angewendete Rührenergie mehr als 20 W/m$^3$ des verfügbaren Volumens und die Reaktionszeit maximal 5 Minuten betragen.

2. Verfahren nach Anspruch 1, dadurch gekennzeichnet, daß in c) die Abtrennung der Flocken und/oder Reaktionsprodukte sowie weiteren unlöslichen Feststoffe von der wäßrigen Calciumhydroxidlösung unter Einsatz von Schrägplattenklärern und/oder Röhrensedimentatoren erfolgt.

3. Verfahren nach einem der Ansprüche 1 und 2, dadurch gekennzeichnet, daß in a) das oder die Flockungshilfsmittel enthaltendes Wasser eingesetzt wird.

4. Verfahren nach einem der Ansprüche 1 bis 3, dadurch gekennzeichnet, daß in a) ein Wasser eingesetzt wird, das vorher enthärtet und/oder entcarbonisiert und/oder dessen Gehalt an Kohlenstoffdioxid durch Belüftung verringert wurde.

5. Verfahren nach einem der Ansprüche 1 bis 4, dadurch gekennzeichnet, daß in a) vor oder während des Lösens ein oder mehrere Magnesiumsalze und/oder Magnesiumoxid und/oder Eisensalze zugesetzt werden.

6. Verfahren nach einem der Ansprüche 1 bis 5, dadurch gekennzeichnet, daß in b) die Ausreaktionszeit maximal 4 Minuten beträgt.

7. Verfahren nach einem der Ansprüche 1 bis 6, dadurch gekennzeichnet, daß die in c) von der Calciumhydroxidlösung abgetrennten Flocken und/oder Reaktionsprodukte sowie weiteren unlöslichen Feststoffe unter Schwerkrafteinwirkung mit und ohne zusätzliche Einwirkungen von Krählvorrichtungen derart eingedickt werden, daß der hierbei entstehende Schlamm einen Feststoffgehalt von mindestens 5-15 Gew.% aufweist.

8. Verfahren nach einem der Ansprüche 1 bis 7, dadurch gekennzeichnet, daß ein Teil des abgetrennten Schlamms in oder vor a) zurückgeführt wird.

**Claims**

1. A process for the preparation and purification of an aqueous calcium hydroxide solution using lime milk and/or solid calcium hydroxide and/or calcium oxide with the following process steps :
   a) dissolving in water the calcium hydroxide and/or solid calcium hydroxide and/or calcium oxide suspended in the lime milk in the presence of one or more flocculating agents using an agitator, wherein the mixing into the water of the component(s) to be dissolved takes place in the zone intended for dissolution and/or in another zone and/or in feed pipes ;

b) reacting out the flocks and/or reaction products formed in the course of the dissolution according to a), and also other insoluble solid matter to form sedimentable particles ;

c) separating the flocks and/or reaction products and also other insoluble solid matter from the calcium hydroxide solution by sedimentation, characterised in that in a) the agitation energy applied is more than 20 W/m$^3$ of the available volume and the reaction time is at most 5 minutes.

2. A process according to Claim 1, characterised in that in c) the separation of the flocks and/or reaction products and also other insoluble solid matter from the aqueous calcium hydroxide solution is effected using inclined plate clarifiers and/or tubular sedimentators.

3. A process according to either of Claims 1 and 2, characterised in that in a) water containing the flocculating agent or agents is used.

4. A process according to any one of Claims 1 to 3, characterised in that in a) water is used which has been previously softened and/or decarbonated and/or the carbon dioxide content of which has been reduced by aeration.

5. A process according to any one of Claims 1 to 4, characterised in that in a) one or more magnesium salts and/or magnesium oxide and/or iron salts are added before or during dissolution.

6. A process according to any one of Claims 1 to 5, characterised in that in b) the reacting out time is at most 4 minutes.

7. A process according to any one of Claims 1 to 6, characterised in that the flocks and/or reaction products and also other insoluble solid matter separated in c) from the calcium hydroxide solution are so concentrated under the effect of gravity, with and without additional effects of raking devices, that the sludge thus formed has a solid content of at least 5-15 % by weight.

8. A process according to any one of Claims 1 to 7, characterised in that a portion of the separated sludge is recycled in or prior to a).

**Revendications**

1. Procédé pour la préparation et la purification d'une solution aqueuse d'hydroxyde de calcium en utilisant du lait de chaux et/ou de l'hydroxyde de calcium solide et/ou de l'oxyde de calcium, comportant les étapes suivantes :

a) mise en solution dans l'eau de l'hydroxyde de calcium en suspension dans le lait de chaux et/ou de l'hydroxyde de calcium solide et/ou de l'oxyde de calcium, en présence d'un ou plusieurs adjuvants de floculation en utilisant un agitateur, l'introduction et le mélange dans l'eau du ou des composants à dissoudre ayant lieu dans la zone prévue pour la mise en solution et/ou dans une zone particulière et/ou dans des conduites d'amenée,

b) mise en réaction des matières formées en a) lors de la mise en solution : flocons et/ou produits de réaction ainsi qu'autres matières solides insolubles, avec formation de particules décantables,

c) séparation par sédimentation des flocons et/ou des produits de réaction ainsi que des autres matières solides insolubles de la solution d'hydroxyde de calcium, caractérisé en ce que l'énergie d'agitation utilisée en a) est supérieure à 20 W/m$^3$ du volume disponible et le temps de réaction atteint au maximum 5 minutes.

2. Procédé selon la revendication 1, caractérisé en ce qu'en c), la séparation des flocons et/ou des produits de réaction ainsi que d'autres matières solides insolubles de la solution d'hydroxyde de calcium a lieu en utilisant des clarificateurs à plateaux inclinés et/ou des décanteurs à tubes.

3. Procédé selon l'une des revendications 1 et 2, caractérisé en ce qu'on introduit en a) l'eau contenant le ou les adjuvants de floculation.

4. Procédé selon l'une des revendications 1 à 3, caractérisé en ce qu'on introduit en a) de l'eau ayant été au préalable adoucie et/ou décarbonatée et/ou dont la teneur en dioxyde de carbone a été réduite par aération.

5. Procédé selon l'une des revendications 1 à 4, caractérisé en ce qu'on ajoute en a), avant ou pendant la mise en solution, un ou plusieurs sels de magnésium et/ou de l'oxyde de magnésium et/ou des sels de fer.

6. Procédé selon l'une des revendications 1 à 5, caractérisé en ce qu'en b) le temps de réaction atteint au maximum 4 minutes.

7. Procédé selon l'une des revendications 1 à 6, caractérisé en ce que les matières séparées de la solution d'hydroxyde de calcium en c) : flocons et/ou produits de réaction ainsi qu'autres matières solides insolubles, sont épaissies sous l'action de la pesanteur avec et sans action supplémentaire d'organes racleurs, de manière que les boues ainsi produites aient une teneur en matières solides d'au moins 5 à 15 % en poids.

8. Procédé selon l'une des revendications 1 à 7, caractérisé en ce qu'une partie des boues séparées est ramenée en a) ou avant a).

Bild 1

Kalkmilch

Lösewasser

Hochreines Kalkwasser

EP 0 158 269 B1